# EUROPÄISCHE PATENTSCHRIFT

(11) **EP 2 067 899 B1**
(45) Veröffentlichungstag und Bekanntmachung des Hinweises auf die Patenterteilung: **26.06.2019**
(21) Anmeldenummer: 08170699.6
(22) Anmeldetag: 04.12.2008
(51) Int. Cl.: E01C 19/40, E01C 19/48, F16F 3/12

(54) **Rütteleinrichtung**
Vibrating device
Dispositif de vibrage

(30) Priorität: 04.12.2007 DE 202007017018 U
(43) Veröffentlichungstag der Anmeldung: 10.06.2009
(73) Patentinhaber: Wirtgen GmbH, 53578 Windhagen (DE)
(72) Erfinder: Lenz, Martin, 56276, Großmaischeid (DE); Hähn, Günter, 53639, Königswinter (DE)
(74) Vertreter: dompatent von Kreisler Selting Werner - Partnerschaft von Patent- und Rechtsanwälten mbB

(56) Entgegenhaltungen:
- EP-A- 0 295 585
- DE-U1- 8 705 586
- GB-A- 576 424
- US-A- 2 261 659
- US-A- 5 529 435

## Beschreibung

Die Erfindung betrifft eine Rütteleinrichtung für eine Baumaschine nach dem Oberbegriff des Anspruchs 1, bzw. eine selbstfahrende Baumaschine, insbesondere einen Gleitschalungsfertiger, nach Anspruch 16.

Derartige Rütteleinrichtungen dienen in Gleitschalungsfertigern dazu, Beton zu verflüssigen und zu verdichten. Gleitschalungsfertiger werden im Straßen-, Kanal- und Flugplatzbau eingesetzt. Sie können beispielsweise Straßenbeläge, Wasserrinnen, Bordsteinprofile, und Sicherheits-Leitwände für Straßen aus Beton herstellen.

Bisher bekannte Rütteleinrichtungen werden üblicherweise bei Baumaschinen, insbesondere Gleitschalungsfertigern verwendet. Eine solche Rütteleinrichtung ist aus der US 5529435 bekannt und weist ein Gehäuse, einen in dem Gehäuse angeordneten Schwingungserreger und eine Befestigungseinrichtung auf. Das Gehäuse der Rütteleinrichtung wird mit Hilfe der Befestigungseinrichtung an der Baumaschine befestigt, wobei die Befestigungseinrichtung mindestens eine Feder, insbesondere Schraubenfeder aufweist, die die Übertragung von Schwingungen des Schwingungserregers auf die Baumaschine weitestgehend oder vollständig verhindert und somit die Rütteleinrichtung von dem Maschinenrahmen entkoppelt.

Bei den bekannten Rütteleinrichtungen gemäß US 5,529,435 ist es durchaus üblich, dass die Befestigungseinrichtung während des Betriebs zumindest teilweise in das Baumaterial eingetaucht ist. Dadurch besteht bei den bisher bekannten Rütteleinrichtungen der Nachteil, dass sich Körner der Zuschlagstoffe des Betons zwischen die Federn setzen können. Diese Körner werden zunehmend von Beton umgeben, bis die Federn durch das Festbacken des Beton unbeweglich werden und die Federeigenschaften der Federn verschlechtert werden. Dadurch ist die Entkopplung letztlich aufgehoben und die Schwingungen der Rütteleinrichtung können auf den Maschinenrahmen übertragen werden. Dies kann Schäden an der Befestigungseinrichtung, am Maschinenrahmen und insbesondere an der Rütteleinrichtung zur Folge haben.

Aus der GB576424 ist eine Kombination unterschiedlicher Federelemente für Schockabsorber bekannt, um die Federeigenschaften zu kombinieren. Diese Schockabsorber oder Dämpfungselemente sollen Motoren, Generatoren oder andere Aggregate in Fahrzeugen und Luftfahrzeugen elastisch lagern und Instrumente vor Vibrationsschäden bewahren. Diese Schockabsorber sind nicht für den Einsatz in Beton konzipiert und erfüllen andere Aufgaben, die in der Kombination der Dämpfungseigenschaften unterschiedlicher Dämpfungsmaterialien auf einem grundsätzlich anderen technischen Gebiet liegt.

Die US 2,261,659 beschreibt eine Vibrationseinheit für einen Gleitschaltungsfertiger, die über Verbindungslaschen mit einem Maschinenrahmen verbunden ist.

Die DE 87 05 586 U beschreibt eine zylindrische Schrauben-Druckfeder einer Gleitringdichtung. Mehrere zylindrische Schrauben-Druckfedern werden als sogenannte Gruppenbefederung bei einer Gleitringdichtung eingesetzt, um einen Gleitring mit seiner Gleitfläche an diejenige eines Gegenringes anzupressen. Innerhalb der Schrauben-Druckfedern ist ein Körper aus einem PTFE-Strang von miteinander verbundenen Fasern angeordnet.

Aufgabe der vorliegenden Erfindung ist es, eine Rütteleinrichtung der eingangs beschriebenen Art derart weiterzubilden, dass sich auch nach längerer Betriebszeit keine Schwingungen der Rütteleinrichtung auf den Maschinenrahmen übertragen.

Zur Lösung dieser Aufgabe dienen die Merkmale des Anspruchs 1 bzw. 16.

Die Erfindung sieht in vorteilhafter Weise vor, dass bei einer Rütteleinrichtung der eingangs beschriebenen Art die Zwischenräume zwischen den Federwicklungen der mindestens einen Schraubenfeder von einem elastischen Element nach innen verschlossen oder ausgefüllt sind, wobei das Element aus einer elastischen Kunststoffmasse, insbesondere aus Gummi besteht.

Das elastische Element besteht aus einer elastischen Kunststoffmasse wie z. B. Gummi, Elastomer oder Ähnlichem. Die Federeigenschaften der mindestens einen Schraubenfeder sind gemeinsam mit dem elastischen Element derart an die Schwingung des Schwingungserregers angepasst, dass die Übertragung von Schwingungen des Schwingungserregers auf den Maschinenrahmen weitestgehend oder vollständig verhindert ist.

Die Ausführungsform hat den Vorteil, dass sich kein Baumaterial in bzw. an den Schraubenfedern festsetzen kann. Damit bleiben die Federeigenschaften, auch wenn die Befestigungseinrichtung für längere Zeit in dem Baumaterial eingetaucht ist, erhalten.

Das elastische Element kann ein Formteil sein, das in die Schraubenfeder eingesetzt ist. Das Formteil kann der Innenkontur der Schraubenfeder angepasst sein, so dass es in die Schraubenfeder eingedreht werden kann. Dies hat den Vorteil, dass bei einer Demontage das Formteil wieder aus der Schraubenfeder herausgedreht werden kann.

Alternativ kann dass Formteil eine zylindrische Form aufweisen, wobei der Durchmesser des Formteils gleich oder geringfügig kleiner ist als der Innendurchmesser der Schraubenfeder.

Die Enden der Schraubenfeder können mit stirnseitig angeordneten Befestigungsplatten verbunden sein. Das Formteil kann an einem oder beiden stirnseitigen Enden jeweils einen Vorsprung aufweisen, wobei dieser Vorsprung in eine dem Vorsprung angepasste Aussparung der Befestigungsplatte oder in eine Innensechskantschraube eingreift. Die Vorsprünge des Formteils können aus Einlegeteilen bestehen, die während der Fertigung des Formteils in das Formteil eingebracht werden.

Die mindestens eine Schraubenfeder kann auf der Außenseite von einem schichtförmigen elastischen Element ummantelt sein, das die Zwischenräume zwischen den Federwicklungen nach innen verschließt. Dieses schichtförmige elastische Element kann eine Schrumpffolie oder einen Faltenbalg sein. Auch kann das auf der Außenseite der Schraubenfeder angeordnete schichtförmige elastische Element in Kombination mit dem zylindrischen Formteil verwendet werden.

Bei einem weiteren Ausführungsbeispiel kann die Schraubenfeder von dem elastischen Element im Wesentlichen mit Ausnahme der Befestigungseinrichtung vollständig umgeben sein. Die Schraubenfeder kann mit dem elastischen Werkstoff vergossen sein, wobei die Federwicklungen der Schraubenfeder vollständig umschlossen sind.

Im Inneren der mindestens einen Schraubenfeder kann ein Hohlraum angeordnet sein, der sich entlang der Schraubenfederachse erstreckt und an den beiden Stirnseiten der Schraubenfeder offen ist.

Dies hat den Vorteil, dass die Schraubenfedern leichter an den Befestigungsplatten zu befestigen sind.

Die Befestigungseinrichtung kann bei einem weiteren Ausführungsbeispiel mehr als eine, vorzugsweise vier Schraubenfedern aufweisen.

Die Befestigungsplatten, insbesondere die untere Befestigungsplatte kann zwischen den Stellen, an denen die Schraubenfedern mit der jeweiligen Befestigungsplatte verbunden sind, jeweils mindestens eine Öffnung aufweisen. Diese mindestens eine Öffnung kann zumindest so groß sein, dass ein Gegenstand, der zwischen zwei benachbarten Schraubenfedern in den Innenraum zwischen den Schraubenfedern hineingelangt, den Innenraum durch die Öffnung wieder verlassen kann.

Dies hat den Vorteil, dass Gegenstände, wie zum Beispiel Steine, die durch die Schraubenfedern hindurch gelangen, durch die Öffnungen wieder heraus gespült werden können.

Die vorzugsweise vier Schraubenfedern können einstückig von einem elastischen Element umschlossen, vorzugsweise mit diesem vergossen sein. Die Schraubenfedern und das elastische Element bilden auf diese Weise ein einstückiges Federpaket, das als Einheit an den Befestigungsplatten befestigt werden kann.

Die beschriebene Rütteleinrichtung kann Bestandteil einer selbstfahrenden Baumaschine, insbesondere eines Gleitschalungsfertigers sein.

Im Folgenden werden unter Bezugnahme auf die Zeichnungen Ausführungsbeispiele der Erfindung näher erläutert. Es zeigen schematisch
- Fig. 1: eine Seitenansicht auf einen Teil eines Gleitschalungsfertigers,
- Fig. 2: eine Seitenansicht einer Rütteleinrichtung mit Befestigungseinrichtung eines Gleitschalungsfertigers,
- Fig. 3: eine Schraubenfeder mit einer elastischen Folie,
- Fig. 3a: eine Schraubenfeder mit Innenhülse,
- Fig. 3b: eine Schraubenfeder mit Formteil,
- Fig. 3c: eine Schraubenfeder mit zylindrischem Formteil,
- Fig. 3d: eine umspritzte Schraubenfeder,
- Fig. 3e: eine Schraubenfeder mit Außenhülse,
- Fig. 4: ein Schraubenfederpaket einer Befestigungseinrichtung,
- Fig. 5: eine Draufsicht auf das Schraubenfederpaket aus Fig. 4,
- Fig. 6: eine Befestigungsplatte der Befestigungseinrichtung.

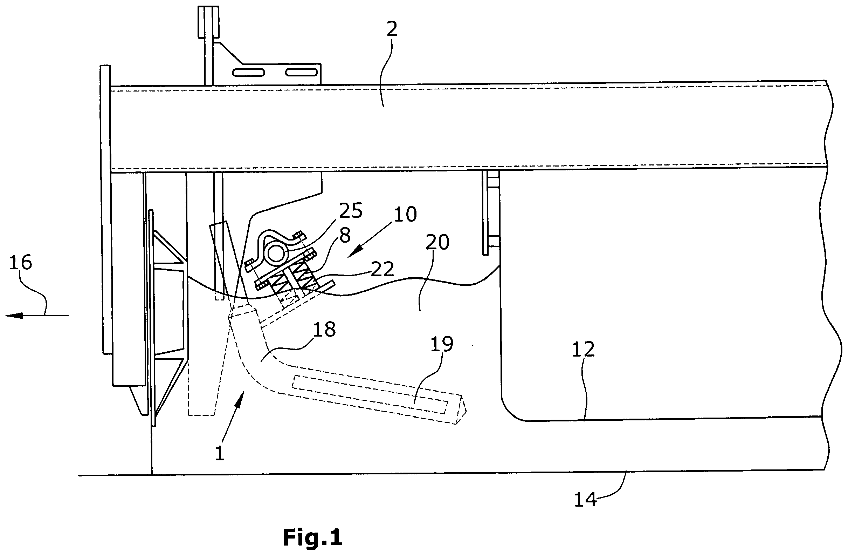

Fig. 1 zeigt einen Teil eines Gleitschalungsfertigers. Der Gleitschalungsfertiger weist eine sich über die Breite des Gleitschalungsfertigers erstreckende Druckbohle 12 auf, die parallel zum Boden 14 verläuft und sich quer zur Fahrtrichtung 16 erstreckt. An den seitlichen Enden der Druckbohle 12 ist jeweils eine hier nicht dargestellte höhenverstellbare Seitenwand angeordnet. In Fahrtrichtung 16 vor der Druckbohle 12 sind mehrere Rütteleinrichtungen 1 angeordnet. Diese Rütteleinrichtungen 1 sind in Reihe quer zur Fahrtrichtung angeordnet. Die Rütteleinrichtung 1 ist in Baumaterial, das aus Beton 20 oder aus einer Betonmischung besteht, eingetaucht. Jede Rütteleinrichtung 1 weist ein Gehäuse 18, einen in dem Gehäuse 18 angeordneten Schwingungserreger 19 und eine Befestigungseinrichtung 10 auf. Der Schwingungserreger 19 führt angetrieben durch beispielsweise einen elektrischen Antrieb in Verbindung mit einer Unwuchtmasse Schwingungen aus. Die Unwuchtmasse kann beispielsweise mit 12.000 U/min rotieren. Die Schwingungsamplitude ist dabei sehr gering, beispielsweise ± 0,4 mm am freien Ende der Rütteleinrichtung. Das Baumaterial 20 wird dadurch verflüssigt und dann durch die Druckbohle 12 in die gewünschte Form gebracht. Die Rütteleinrichtungen 1 verflüssigen das Baumaterial in einem Wirkungsbereich mit einem Durchmesser von ca. 75 cm um das Gehäuse 18. Die Rütteleinrichtungen 1 sind so angeordnet, dass sich die Schwingungen benachbarter Rütteleinrichtungen überschneiden. Die Befestigungseinrichtung 10 befestigt das Gehäuse 18 der Rütteleinrichtung 1 an einem mit dem Maschinenrahmen 2 der Baumaschine verbundenen Rohr 25. Das Rohr 25 ist mit Hilfe einer Kolben-Zylindereinheit im Bezug auf den Maschinenrahmen höhenverstellbar. Außerdem kann das Rohr 25 in der Breite verlängert werden und auf diese Weise der Arbeitsbreite angepasst werden. Die Befestigungseinrichtung kann alternativ an der Druckbohle 12 befestigt werden. Damit die Schwingungen, die der Schwingungserreger 19 ausführt nicht auf den Maschinenrahmen 2 der Baumaschine übertragen werden, ist die Befestigungseinrichtung mit mehreren Schraubenfedern 8 mit weicher Federcharakteristik versehen. Die Schraubenfedern 8 weisen jeweils mehrere Federwicklungen auf. Die Federeigenschaften der Schraubenfedern 8 sind auf die Schwingungen des Schwingungserregers 19 abgestimmt, so dass die Übertragung von Schwingungen des Schwingungserregers 19 auf die Baumaschine weitestgehend oder vollständig verhindert wird. Die Befestigungseinrichtung 10 mit den Schraubfedern 8 kann während des Betriebs zum Teil in den Beton 20 eingetaucht sein.

In dem erfindungsgemäßen Ausführungsbeispiel in Fig. 1 sind elastische Elemente 22, die jeweils aus Formteilen bestehen in die Schraubenfedern 8 eingebracht. Die Formteile sind der Innenkontur der jeweiligen Schraubenfeder 8 angepasst, so dass die Zwischenräume zwischen den Federwicklungen nach innen verschlossen sind. Die Federeigenschaften der elastischen Elemente sind den Schraubenfedern 8 so angepasst, dass die Feder- und Dämpfungseigenschaften der Befestigungseinrichtung 10 sich nicht oder nur unwesentlich verschlechtern, so dass weiterhin die Übertragung von Schwingungen der Rütteleinrichtung 1 auf den Maschinenrahmen 2 der Baumaschine weitestgehend oder vollständig verhindert ist. Dadurch, dass die Zwischenräume zwischen den Federwicklungen der Schraubenfedern 8 ausgefüllt sind, können sich keine Körner, Steine oder Ähnliches mehr an den Schraubenfedern 8 festsetzen, an denen sich der Beton 20 agglomerieren kann.

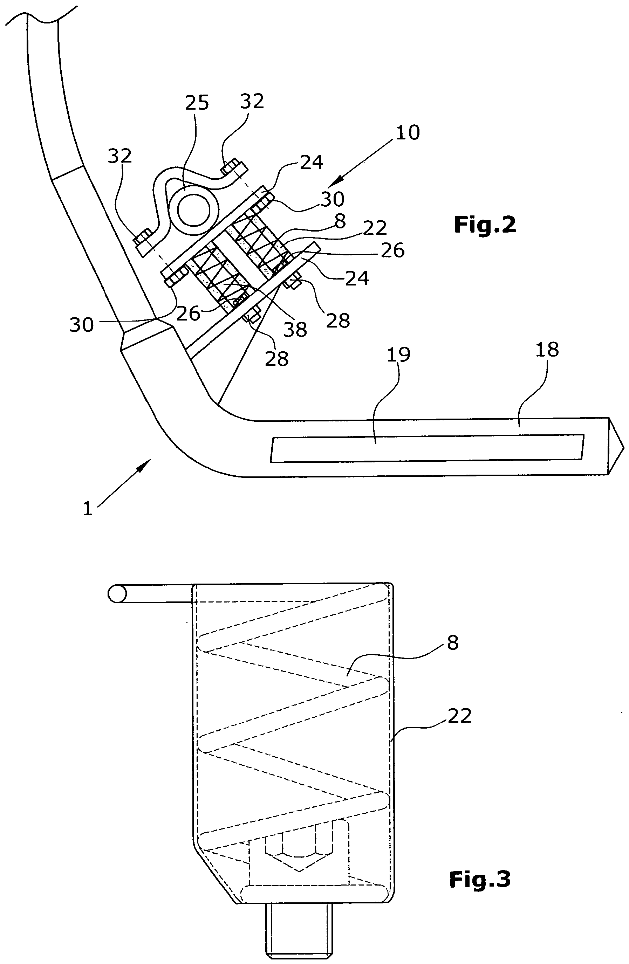

In Fig. 2 ist ein weiteres Ausführungsbeispiel dargestellt. Jede Schraubenfeder 8 ist mit einem elastischen Element 22 vergossen oder von einem elastischen Element umgeben, der die Federwicklungen der Schraubenfeder 8 vollständig umschließt. Im Inneren jeder Schraubenfeder 8 ist ein Hohlraum 38, der sich entlang der jeweiligen Schraubenfederachse erstreckt und an den beiden Stirnseiten der jeweiligen Schraubenfeder 8 offen ist. Die Schraubenfedern 8 sind an der unteren Befestigungsplatte 24 mit Hilfe von Schrauben 26 und Muttern 28 befestigt. Die letzte Federwicklung der Schraubenfeder 8 weist einen geringeren Durchmesser auf als die anderen Federwicklungen der Schraubenfedern 8 und diese letzte Federwicklung wird zwischen dem Kopf einer Schraube 26 und der unteren Befestigungsplatte 24 eingeklemmt. Auf der unteren Seite der unteren Befestigungsplatte 24 sind die jeweiligen Schrauben 26 mit Muttern 28 befestigt. Die Schraubenfedern 8 sind an der oberen Befestigungsplatte 24 beispielsweise dadurch befestigt, dass die jeweilige letzte Federwicklung in die entgegengesetzte Richtung gewickelt ist, sodass diese letzte Federwicklung eine ösenartige Öffnung bildet. Diese letzten Federwicklungen wird zwischen dem Kopf einer Schraube 30 und der oberen Befestigungsplatte 24 eingeklemmt. Die Schraube 30 ist auf der oberen Seite der zweiten Befestigungsplatte 26 ebenfalls mit einer Mutter 32 befestigt.

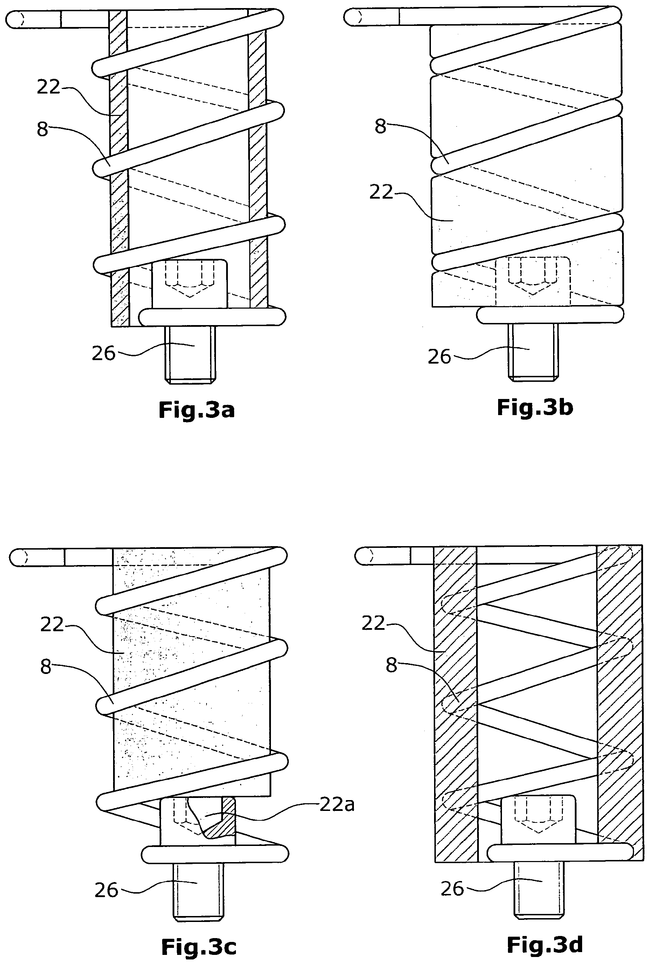

In Fig. 3a ist eine Schraubenfeder 8 dargestellt. Die Zwischenräume zwischen den Federwicklungen der Schraubenfeder 8 sind mit Hilfe eines schlauchförmigen elastischen Element oder Formteil 22 verschlossen. Das schlauchförmige elastische Element 22 kann aus einem elastischen Stoff oder einer Folie mit einer Dicke von bis zu mehreren Millimetern sein. Das schlauchförmige elastische Element 22 kann z. B. ein Schrumpfschlauch sein, der die Außenseite der Schraubenfeder 8 ummantelt. Alternativ könnte auch ein Faltenbalg verwendet werden. In Kombination mit dem Schrumpfschlauch oder dem Faltenbalg könnte zusätzlich ein zylindrisches elastisches Formteil 22 im Inneren der Schraubenfeder 8 verwendet werden.

Fig. 3b-3f zeigen alternative Ausführungsbeispiele für das elastische Element 22. Fig. 3b zeigt eine Innenhülse, deren Außendurchmesser gleich oder geringfügig kleiner ist als der Innendurchmesser der Schraubenfeder 8. Fig. 3c zeigt eine Schraubenfeder mit einem Formteil. Das Formteil ist der Innenkontur der Schraubenfeder 8 angepasst und weist eine Aussparung auf, um den Kopf der Schraube 26 aufzunehmen. Dieses Ausführungsbeispiel wurde bereits bei der Beschreibung zu Fig. 1 näher erläutert. Fig. 3d zeigt ein zylindrisches Formteil mit einem Außendurchmesser, der gleich oder geringfügig kleiner ist als der Innendurchmesser der Schraubenfeder 8. Das Formteil weist einen Vorsprung 22a auf, der dem Innensechskant des Schraubenkopfs angepasst ist und in diesen eingreift. Alternativ kann das Formteil aus Fig. 3c keine Aussparung und das Formteil aus Fig. 3d keinen Vorsprung aufweisen. In diesem Fall würden die Formteile auf dem jeweiligen Schraubenkopf der Schraube 26 aufliegen.

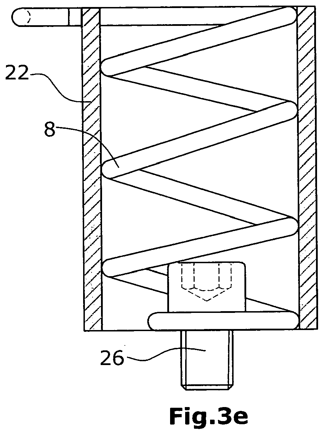

Fig. 3e zeigt eine Schraubenfeder 8 bei der die Federwicklungen mit einem elastischen Element 22 umgossen sind. Dieses Ausführungsbeispiel wurde bereits in der Beschreibung zu Fig. 2 näher erläut. Fig. 3f zeigt eine Schraubenfeder 8, die von einer Außenhülse umschlossen ist. Diese Außenhülse weist einen Innendurchmesser auf, der gleich oder geringfügig größer ist als der Außendurchmesser der Schraubenfeder 8.

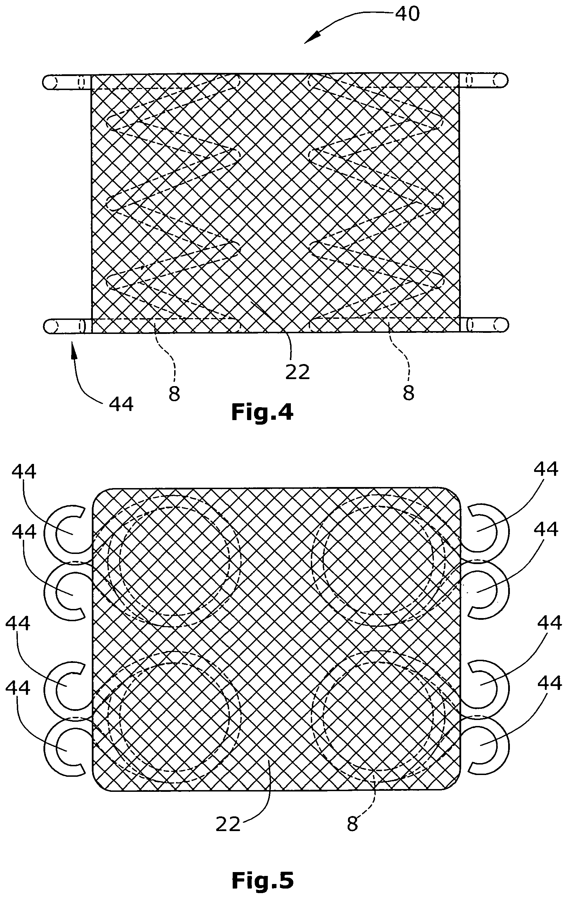

Fig. 4 und Fig. 5 zeigen eine Seitenansicht und eine Draufsicht auf ein Federpaket 40, das aus vier Schraubenfedern 8 besteht, wobei diese mit einem elastischen Element 22 vergossen sind. Damit das Federpaket 40 an den Befestigungsplatten befestigt werden kann, sind die Federwicklungen an den jeweiligen Enden der Schraubenfedern 8 in die entgegengesetzte Richtung gedreht, sodass diese ösenartige Öffnungen 44 bilden. Diese ösenartigen Öffnungen 44 befinden sich außerhalb des elastischen Werkstoffs 22. Es werden Schrauben verwendet, um diese ösenartigen letzten Federwicklungen zwischen den jeweiligen Schraubenköpfen und der jeweiligen angrenzenden Befestigungsplatte 24 einzuklemmen. Auf der jeweiligen anderen Seite der Befestigungsplatte 24 bzw. der zweiten Befestigungsplatte 26 werden die Schrauben mit Hilfe von Muttern festgeschraubt.

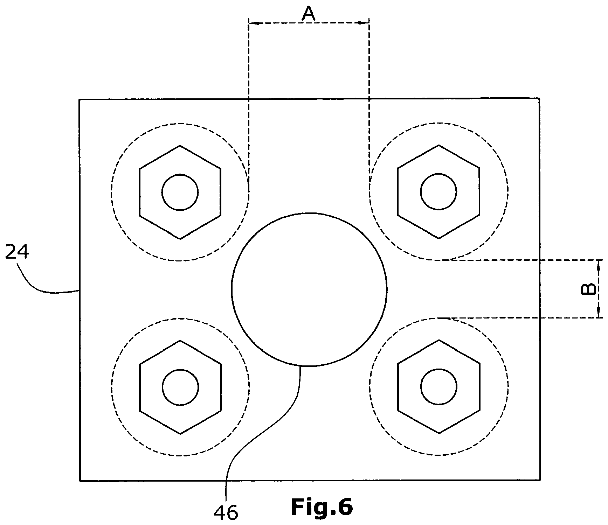

In Fig. 6 ist eine Ansicht der unteren Bodenplatte 24 aus Fig. 1 von der Unterseite dargestellt. Diese untere Bodenplatte 24 weist eine Öffnung 46 auf, die einen Durchmesser besitzt, der größer ist als der Abstand A, B zwischen zwei benachbarten Schraubenfedern 8. Auf diese Weise können Körner, die zwischen den Schraubenfedern 8 hindurch in den Innenraum zwischen den Schraubenfedern 8 gelangt sind, durch die Öffnung 46 wieder ausgespült werden.

## Patentansprüche

1. Rütteleinrichtung (1) für eine Baumaschine, insbesondere einen Gleitschalungsfertiger, mit
- einem Gehäuse (18),
- einem in dem Gehäuse (18) angeordneten Schwingungserreger (19) und
- einer mit mindestens einer Schraubenfeder (8) mit mehreren Federwicklungen versehenen Befestigungseinrichtung (10) zum Befestigen des Gehäuses (18) an der Baumaschine,
**dadurch gekennzeichnet,dass**
die Zwischenräume zwischen den Federwicklungen der mindestens einen Schraubenfeder (8) der Befestigungseinrichtung (10) von einem elastischen Element (22) nach innen verschlossen oder zumindest teilweise ausgefüllt sind, wobei das elastische Element (22) aus einer elastischen Kunststoffmasse, insbesondere aus Gummi besteht.

2. Rütteleinrichtung (1) nach Anspruch 1, **dadurch gekennzeichnet, dass** das elastische Element (22) aus einem Formteil besteht, das in die Schraubenfeder (8) eingesetzt ist.

3. Rütteleinrichtung (1) nach Anspruch 2, **dadurch gekennzeichnet, dass** das Formteil der Innenkontur der Schraubenfeder (8) angepasst ist.

4. Rütteleinrichtung (1) nach Anspruch 2, **dadurch gekennzeichnet, dass** das Formteil eine zylindrische Form aufweist, wobei der Durchmesser des Formteils gleich oder geringfügig kleiner ist als der Innendurchmesser der Schraubenfeder (8).

5. Rütteleinrichtung (1) nach einem der Ansprüche 2 bis 4, **dadurch gekennzeichnet, dass** die Enden der Schraubenfeder (8) mit stirnseitigen Befestigungsplatten (24) verbunden sind und dass das Formteil mindestens einen stirnseitigen Vorsprung aufweist, der in eine dem Vorsprung angepasste Aussparung der Befestigungsplatte (24) eingreift.

6. Rütteleinrichtung (1) nach einem der Ansprüche 1 bis 5, **dadurch gekennzeichnet, dass** das elastische Element (22) eine Schlauchform aufweist, wobei das elastische Element (22) die mindestens eine Schraubenfeder (8) auf der Außenseite ummantelt und die Zwischenräume zwischen den Federwicklungen verschließt.

7. Rütteleinrichtung (1) nach Anspruch 6, **dadurch gekennzeichnet, dass** das elastische Element (22) ein Schrumpfschlauch ist.

8. Rütteleinrichtung (1) nach Anspruch 7, **dadurch gekennzeichnet, dass** das elastische Element (22) ein Faltenbalg ist.

9. Rütteleinrichtung (1) nach einem der Ansprüche 1, **dadurch gekennzeichnet, dass** die mindestens eine Schraubenfeder (8) von dem elastischen Element (22) im Wesentlichen vollständig umgeben ist.

10. Rütteleinrichtung (1) nach Anspruch 9, **dadurch gekennzeichnet, dass** die mindestens eine Schraubenfeder (8) mit einem elastischen Werkstoff (22) vergossen ist, der die Federwicklungen der Schraubenfeder (8) vollständig umschließt.

11. Rütteleinrichtung (1) nach Anspruch 9 oder 10, **dadurch gekennzeichnet, dass** sich im Innern der mindestens einen Schraubenfeder (8) ein Hohlraum befindet, der sich entlang der Schraubenfederachse erstreckt und an den beiden Stirnseiten der Schraubenfedern (8) offen ist.

12. Rütteleinrichtung (1) einem der Ansprüche 1 bis 11, **dadurch gekennzeichnet, dass** die Befestigungseinrichtung (10) mehr als eine, vorzugsweise vier Schraubenfedern (8) aufweist.

13. Rütteleinrichtung (1) nach Anspruch 12, **dadurch gekennzeichnet, dass** die Schraubenfedern (8) einstückig von einem elastischen Werkstoff des elastischen Elementes (22) umgeben sind, vorzugsweise mit diesem vergossen sind.

14. Rütteleinrichtung (1) nach einem der Ansprüche 12 oder 13, **dadurch gekennzeichnet, dass** die Enden der Schraubenfedern (8) mit stirnseitigen Befestigungsplatten (24) verbunden sind und dass mindestens eine der Befestigungsplatten (24) zwischen den Stellen, an denen die Schraubenfedern (8) mit der mindestens einen Befestigungsplatte (24) verbunden sind, mindestens eine Öffnung (46) aufweisen.

15. Rütteleinrichtung (1) nach Anspruch 14, **dadurch gekennzeichnet, dass** die mindestens eine Öffnung (46) zumindest so groß ist, dass ein Gegenstand der zwischen zwei benachbarten Schraubenfedern (8) in den Innenraum zwischen den Schraubenfedern (8) hineingelangt, auch den Innenraum durch die Öffnung (46) wieder verlassen kann.

16. Selbstfahrende Baumaschine, insbesondere Gleitschalungsfertiger, mit einer Rütteleinrichtung (1) nach einem der Ansprüche 1 bis 15.

## Claims

1. A jolting device (1) for a construction machine, particularly for a slip-form paver, comprising
- a housing (18),
- a vibration generator (19) arranged in the housing (18), and
- a fastening means (10) provided with at least one coil spring (8) having a plurality of spring windings, said fastening means being operative for fastening the housing (18) to the construction machine,
**characterized in**
**that** the interspaces between the spring windings of said at least one coil spring (8) of the fastening means (10) are closed or at least partially filled towards the interior by an elastic element (22), wherein the elastic element (22) is made of an elastic plastic composition, preferably of rubber.

2. The jolting device (1) according to claim 1, **characterized in that** the elastic element (22) comprises a shaped component inserted into the coil spring (8).

3. The jolting device (1) according to claim 2, **characterized in that** said shaped component is adapted to the inner contour of the coil spring (8).

4. The jolting device (1) according to claim 2, **characterized in that** said shaped component has a cylindrical shape, the diameter of the shaped component being equal to or slightly smaller than the inner diameter of the coil spring (8).

5. The jolting device (1) according to any one of claims 2 to 4, **characterized in that** the ends of the coil spring (8) are connected to end-side fastening plates (24) and that the shaped component is provided with at least one end projection engaging a recess of the fastening plate (24) adapted to said projection.

6. The jolting device (1) according to any one of claims 1 to 5, **characterized in that** the elastic element (22) has a tubular shape, the elastic element (22) enclosing the at least one coil spring (8) on the outer side and closing the interspaces between the spring windings.

7. The jolting device (1) according to claim 6, **characterized in that** the elastic element (22) is a shrinkage hose.

8. The jolting device (1) according to claim 7, **characterized in that** the elastic element (22) is a bellows.

9. The jolting device (1) according to claim 1, **characterized in that** the at least one coil spring (8) is substantially fully surrounded by the elastic element (22).

10. The jolting device (1) according to claim 9, **characterized in that** the at least one coil spring (8) has an elastic material (22) cast therearound, said elastic material fully enclosing the spring windings of the coil spring (8).

11. The jolting device (1) according to claim 9 or 10, **characterized in that** a hollow space is arranged internally of the at least one coil spring (8), said hollow space extending along the coil spring axis and being open on both end sides of the coil springs (8).

12. The jolting device (1) according to any one of claims 1 to 11, **characterized in that** the fastening means (10) comprises more than one coil spring (8), preferably four coil springs (8).

13. The jolting device (1) according to claim 12, **characterized in that** the coil springs (8) are surrounded by an elastic material of the elastic element (22) to form a one-pieced configuration therewith, and preferably have the elastic material cast therearound.

14. The jolting device (1) according to any one of claims 12 or 13, **characterized in that** the ends of the coil springs (8) are connected to end-side fastening plates (24) and that at least one of the fastening plates (24) is provided with at least one opening (46) between the connecting sites of the coil springs (8) and the at least one fastening plate (24).

15. The jolting device (1) according to claim 14, **characterized in that** said at least one opening (46) has a size at least large enough to allow an object which has passed between two adjacent coil springs (8) into the interior space between the coil springs (8), to leave the inner space again via said opening (46).

16. A self-propelling construction machine, particularly a slip-form paver, provided with a jolting device (1) according to any one of claims 1 to 15.

## Revendications

1. Dispositif vibreur (1) pour une machine de chantier, en particulier un finisseur à coffrage glissant, avec
- un carter (18),
- un générateur de vibrations (19) disposé dans le carter (18) et
- un dispositif de fixation (10), muni d'au moins un ressort hélicoïdal (8) avec plusieurs enroulements de ressort, pour la fixation du carter (18) sur la machine de chantier,
**caractérisé en ce que**
les espaces intermédiaires entre les enroulements de ressort du au moins un ressort hélicoïdal (8) un du dispositif de fixation (10) sont fermés vers l'intérieur par un élément élastique (22) ou sont au moins partiellement comblés, l'élément élastique (22) étant constitué d'une masse de matière plastique élastique, en particulier de caoutchouc.

2. Dispositif vibreur (1) selon la revendication 1, **caractérisé en ce que** l'élément élastique (22) se compose d'une pièce moulée qui est insérée dans le ressort hélicoïdal (8).

3. Dispositif vibreur (1) selon la revendication 2, **caractérisé en ce que** la pièce moulée est adaptée au contour intérieur du ressort hélicoïdal (8).

4. Dispositif vibreur (1) selon la revendication 2, **caractérisé en ce que** la pièce moulée présente une forme cylindrique, le diamètre de la pièce moulée étant égal ou légèrement inférieur au diamètre intérieur du ressort hélicoïdal (8).

5. Dispositif vibreur (1) selon l'une des revendications 2 à 4, **caractérisé en ce que** les extrémités du ressort hélicoïdal (8) sont raccordées à des plaques de fixation (24) côté frontal, et **en ce que** la pièce moulée comporte au moins une saillie côté frontal qui engrène dans un évidement de la plaque de fixation (24) qui est adapté à la saillie.

6. Dispositif vibreur (1) selon l'une des revendications 1 à 5, **caractérisé en ce que** l'élément élastique (22) présente une forme de tuyau, l'élément élastique (22) enveloppant le au moins un ressort hélicoïdal (8) sur le côté extérieur et fermant les espaces intermédiaires entre les enroulements de ressort.

7. Dispositif vibreur (1) selon la revendication 6, **caractérisé en ce que** l'élément élastique (22) est un tuyau thermorétractable.

8. Dispositif vibreur (1) selon la revendication 7, **caractérisé en ce que** l'élément élastique (22) est un soufflet.

9. Dispositif vibreur (1) selon la revendication 1, **caractérisé en ce que** le au moins un ressort hélicoïdal (8) est entouré essentiellement complètement par l'élément élastique (22).

10. Dispositif vibreur (1) selon la revendication 9, **caractérisé en ce que** le au moins ressort hélicoïdal (8) est enrobé d'un matériau (22) élastique qui entoure complètement les enroulements de ressort du ressort hélicoïdal (8).

11. Dispositif vibreur (1) selon la revendication 9 ou 10, **caractérisé en ce que**, à l'intérieur du au moins un ressort hélicoïdal (8), il y a une cavité qui s'étend le long de l'axe de ressort hélicoïdal et est ouverte au niveau des deux côtés frontaux des ressorts hélicoïdaux (8).

12. Dispositif vibreur (1) selon l'une des revendications 1 à 11, **caractérisé en ce que** le dispositif de fixation (10) comporte plus d'un ressort hélicoïdal (8), de préférence quatre.

13. Dispositif vibreur (1) selon la revendication 12, **caractérisé en ce que** les ressorts hélicoïdaux (8) sont, d'un seul tenant, entourés d'un matériau élastique de l'élément élastique (22), de préférence enrobés par ce matériau.

14. Dispositif vibreur (1) selon l'une des revendications 12 ou 13, **caractérisé en ce que** les extrémités des ressorts hélicoïdaux (8) sont raccordées à des plaques de fixation (24) côté frontal, et **en ce qu'**au moins une des plaques de fixation (24) comporte au moins une ouverture (46) entre les endroits où les ressorts hélicoïdaux (8) sont raccordés à la au moins une plaque de fixation (24).

15. Dispositif vibreur (1) selon la revendication 14, **caractérisé en ce que** la au moins une ouverture (46) est au moins suffisamment grande pour qu'un objet qui pénètre entre deux ressorts hélicoïdaux (8) voisins dans l'espace intérieur entre les ressorts hélicoïdaux (8) puisse également quitter de nouveau l'espace intérieur à travers l'ouverture (46).

16. Machine de chantier automotrice, en particulier finisseur à coffrage glissant, avec un dispositif vibreur (1) selon l'une des revendications 1 à 15.
